Europäisches Patentamt

European Patent Office

Office européen des brevets

(11) Publication number: **0 047 759**

**B1**

# EUROPEAN PATENT SPECIFICATION

(45) Date of publication of patent specification: **24.10.84**

(21) Application number: **81900644.6**

(22) Date of filing: **20.03.81**

(86) International application number:
**PCT/GB81/00051**

(87) International publication number:
**WO 81/02712 01.10.81 Gazette 81/23**

(51) Int. Cl.³: **B 60 P 1/08,** B 60 P 1/18,
B 62 D 63/06, B 62 D 53/06

(54) **TILTING TRAILERS FOR VEHICLES.**

(30) Priority: **22.03.80 GB 8009763**

(43) Date of publication of application:
**24.03.82 Bulletin 82/12**

(45) Publication of the grant of the patent:
**24.10.84 Bulletin 84/43**

㊄ Designated Contracting States.
**AT CH DE FR GB LI LU NL SE**

(56) References cited:
DE-B-1 075 441
DE-C- 806 319
FR-A- 729 710
FR-A-1 251 239
FR-A-1 261 388
FR-A-1 277 282
FR-A-1 361 551
FR-A-2 039 492
FR-A-2 055 650
GB-A- 541 205
US-A-2 718 431
US-A-2 995 399

(73) Proprietor: **MASTERNET LIMITED**
**73-75 Mortimer Street**
**London W1N 7TB (GB)**

(72) Inventor: **SNELL, Thomas Bartlett**
**Hillview, Penn Lane Hardington Mandeville**
**Yeovil, Somerset (GB)**

(74) Representative: **Smith, Philip Antony et al**
**REDDIE & GROSE 16 Theobalds Road**
**London WC1X 8PL (GB)**

(56) References cited:
US-A-3 450 281
US-A-3 977 726
US-A-4 133 440

Courier Press, Leamington Spa, England.

## Description

This invention relates to a vehicle trailer having a draw-bar pivotally connected to the load-carrying structure forward of the only or rearmost wheel axle, a jack connected between the draw-bar and the load-carrying structure to lift the said structure relative to the draw-bar and thereby tilt the said said structure about the said wheel axle while the draw-bar remains attached to the timing vehicle and a coiled tension spring interconnecting the draw-bar and the load-carrying structure and acting against the said tilting.

For many purposes it is useful to be able to tip a trailer, either for off- or on-loading. This can be simply done with a two wheeled, centrally balanced trailer by detaching it from the towing vehicle and tilting the body about the wheel axle. For larger trailers, sometimes with four or more wheels, there is the alternative of pivoting the load-carrying member, such as a platform or an open-topped container with a hinged or removable tailgate, about a transverse axis at the rear. The raising of the front of the load-carrying member is generally done hydraulically. With this arrangement the trailer can remain attached to the towing vehicle, but the power required is considerable, it is sometimes a disadvantage to discharge the load from a height, and it requires an intermediate ramp for on-loading a body by sliding or rolling from the ground.

U.S.—A—2,718,431 describes a trailer of the kind referred to in the first paragraph of this specification. However in that specification a load-carrying body is pivotally attached at its rear end to a frame to which the draw-bar is pivotally connected. A first single-acting hydraulic ram serves to tilt the load-carrying body relative to the frame and a second single-acting hydraulic ram then lifts the frame relative to the draw-bar. The spring serves as a return spring to lower the frame back into engagement with the draw-bar after the load has been emptied. The empty body then drops back onto the frame by gravity. To enable a load placed on the tailgate to be lifted an additional winch mounted on the draw-bar has a cable fixed to the front of the body.

DE—B—806,319 shows a double-acting screw mechanism for tilting a trailer body relative to a draw-bar.

The present inventor has investigated the use of a bottle-screw which can be lengthened to tilt the trailer body and which is self-locking to secure the container to the draw-bar in the trailing position. However, when using commercially available bottle-screws and fabricating the connections for them, it is impractical to try to achieve extremely close tolerances. It could be done, but at considerable expense and trouble. Therefore, the tendency is for there to be some looseness in the connections, and for the trailer to rattle and vibrate, thus hastening wear and widening the tolerances even further.

Another problem has been in the load which can conveniently be handled. When the container is fully tilted so that its rear end is resting on the ground, a heavy load is manoeuvred to sit on the rear extremity of the container, which when level is a shallow sloping wall and which when tilted is an even shallower ramp almost level with the ground and sloping in the opposite direction. As the bottle-screw is operated to raise the container to the level position, the load can be eased forward to balance the trailer. But at the initial point of lift very considerable force is required to raise it. This can make the bottle-screw difficult to operate.

A further difficulty lies in the operation of the bottle-screw. A ratchet handle has been developed which can be worked to and fro to extend or reduce its length, but it still requires the operator's other hand to hold another part of the screw to achieve proper functioning. It is desirable for the ratchet to be one-handed, leaving the operator's other hand free, perhaps to guide the load.

A trailer in accordance with the present invention is characterized in that the jack is a bottle-screw operable to effect tilting and return movements of the load-carrying structure in a manner known per se by means of a swingable arm engaging a ratchet by way of a reversible pawl.

In such a construction the spring interconnecting the draw-bar and the load-carrying structure has been found to eliminate the rattles and, although a return spring is not necessary, it considerably increases the load at the rear end of the container which can be raised by the double-acting screw jack. Although the tilting from the level positio has to be done against the action of the spring, this is quite easily achieved with a bottle screw. When using the swingable arm to operate the screw jack by means of the ratchet, the spring facilitates one-handed operation.

All trailers must carry a number plate and light assembly, and generally this will be fitted below the sloping rear end of the container. As the latter tilts, there is a danger of the number plate assembly hitting the ground. A further feature described below is to link this assembly to the draw-bar so that as the container is tilted, the number plate assembly is automatically retracted.

The invention will be described in more detail with the aid of an example illustrated in the accompanying drawings, in which

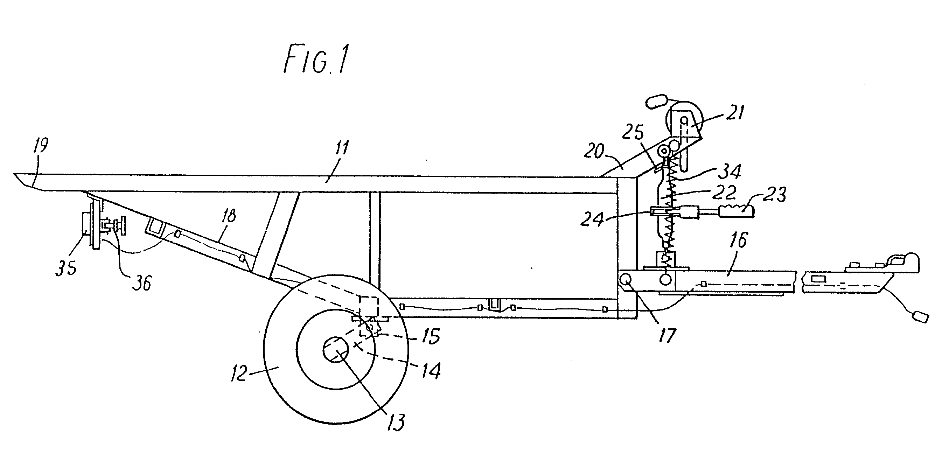

Fig. 1 is a side elevation of a tilting trailer in accordance with the invention,

Fig. 2 is a partial view of the front end of the trailer, and

Fig. 3 is a detail section on the line III—III in Fig. 2.

The trailer has a load-carrying container 11 which is mounted on a pair of wheels 12 rotating about a wheel axle 13. The wheel axle is formed by two stub axles each of which is carried on a swing link 14 attached to the base of the container 11 by a torsion spring 15. The trailer is towed by means of a draw-bar 16 connected to the front of the container 11 by a pivot 17 whose axis is parallel to the wheel axle 13. The container 11 is an open box-like structure, generally rectangular but with a rear wall 18 which, when the trailer is in the towing position shown, slopes upwardly and rearwardly ut a shallow angle. When the container is tilted about the axle 13, the rear edge 19 of this wall 18 will touch the ground, and the wall 18 will slope up from that edge at a very shallow angle.

A bracket 20 projects upwardly and forwardly from the centre of the top of the front wall of the container 11. A winch 21 is carried on this bracket, and is manually operable to help draw loads on to the trailer when tilted. Between the bracket 20 and the draw-bar 16 there is a bottle-screw 22 operable by a handle 23 through a ratchet device 24, which can be switched either to lengthen or shorten the bottle-screw as the handle is worked to and fro. As the bottle-screw is extended, the container will tilt about the axle 13, while the draw-bar 16 can still remain attached to the towing vehicle. When the trailer is being towed, the container 11 is adjusted to be level, and the bottle-screw 22, although to a great extent self-locking, can be further secured by a locking tab 25.

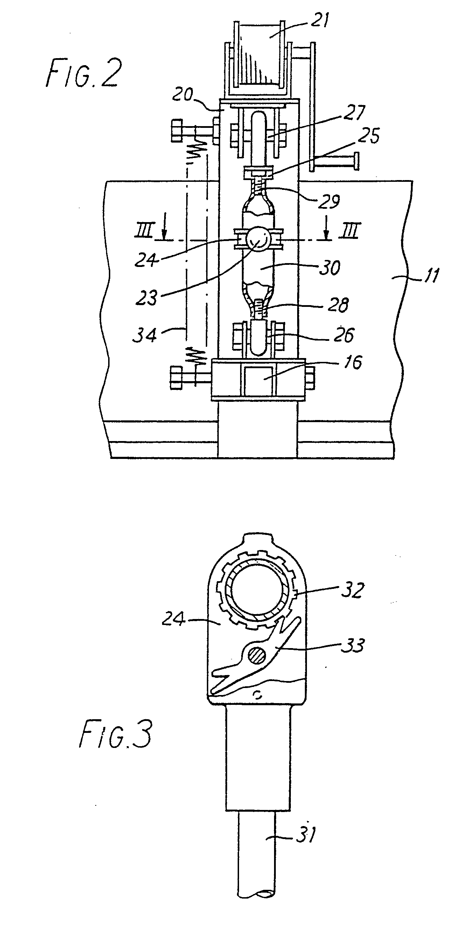

Referring to Fig. 2 it will be seen that the bottle-screw 22 comprises two couplings 26 and 27 pivotally connecting the bottle-screw with the draw-bar 16 and the bracket 20, respectively. Two threaded pins 28 and 29 of opposite hand are screwed into the ends of the body 30 of the bottle screw so that upon rotation of the body the pins 28 and 29 are forced apart or pulled together. Rotation of the body 30 is effected by using the handle 23 to swing an arm 31 (Fig. 3) which engages a ratchet wheel 32 by way of a reversible pawl 33. The locking tab 25 is threaded on the pin 29 and acts as a lock-nut against the end of the body 30.

There also acts between the bracket 20 and the draw-bar 16 a powerful coiled tension spring 34. This urges the container 11 towards the level position, and assists in raising loads placed on the rear wall 18, but it can be overcome, for tilting the trailer, by operation of the bottle-screw 22.

Below the sloping rear wall 18 there is suspended a number plate and light assembly 35. The assembly 35 is hinged and is provided with a clip 36 engageable with the underside of the wall 18 to hold the assembly 35 in a folded back position when the trailer is being tipped. In an alternative construction the folding back of the number plate assembly is effected automatically as the body 11 tilts by means of a cable coupling the assembly to the draw-bar and pulling against a spring bias.

**Claim**

A trailer having a draw-bar (16) pivotally connected (at 17) to the load-carrying structure (11) forward of the only or rearmost wheel axle (13), a jack (22) connected between the draw-bar and the load-carrying structure to lift the said structure relative to the draw-bar and thereby tilt the said structure about the said wheel axle while the draw-bar remains attached to the towing vehicle and a coiled tension spring (34) interconnecting the draw-bar and the load-carrying structure and acting against the said tilting characterized in that the jack is a bottle screw (23 to 30) operable to effect tilting and return movements of the load-carrying structure in a manner known per se by means of a swingable arm (23) engaging a ratchet (24) by way of a reversible pawl (33).

**Revendication**

Remorque comportant une barre de traction (16) montée à pivotement (en 17) sur la structure (11) supportant la charge en avant de l'essieu (13) de roue unique ou situé le plus en arrière, un vérin (22) de liaison entre la barre de traction et la structure de support de la charge pour élever cette structure par rapport à la barre de traction et de ce fait faire basculer la structure autour de l'essieu de roue, tandis que la barre de traction reste attachée au véhicule de remorquage, en un ressort spiralé (34) de tension reliant la barre de traction et la structure de support de la charge at agissant à l'encontre de ce basculement, caractérisé en ce que le verin est une bouteille à vis (23, 30) capable de provoquer des mouvements de basculement et de retour de la structure supportant la charge d'une façon connue en soi au moyen d'un bras pivotant (23) coopérant avec un rochet (24) par l'intermédiaire d'un réversible (33).

**Patentanspruch**

Anhänger mit einer Zugstange (16), die vor der einzigen oder hintersten Radachse (13) schwenkbar bei 17 am last tragenden Rahmen (11) befestigt ist, mit einer zwischen der Zugstange und dem lasttragenden Rahmen befestigten Hebevorrichtung (22) zum Anheben des Rahmens relativ zur Zugstange und dadurch zum Kippen des Rahmens um die Radachse bei am Zugwagen befestigt bleibender Zugstange und mit einer die Zugstange und den lasttragenden Rahmen verbindenden und dem Kippvorgang entgegenwirkenden Schraubenzugfeder (34), dadurch gekennzeichnet, daß die Hebevorrichtung (22) aus einer Flaschenwinde (23 bis 30) besteht, die zur Durchführung von Kipp- und Zurückschwenkbewegungen in an sich bekannter Weise mittels eines Schwenkarms (23) betätigbar ist, der mittels einer reversiblen Sperrklinke (33) in ein Ratschenrad (24) eingreift.

## FIG.1

FIG.2

FIG.3

2